# EUROPEAN PATENT APPLICATION

(11) **EP 4 671 203 A1**
(43) Date of publication of application: **31.12.2025**
(21) Application number: 25176655.6
(22) Date of filing: 15.05.2025
(51) Int. Cl.: C01B 25/42, C01B 25/45, H01M 4/136, H01M 4/58, H01M 4/02, H01M 4/1397, H01M 4/36, H01M 10/054, H01M 4/62

(54) **SODIUM IRON PHOSPHATE PYROPHOSPHATE POSITIVE-ELECTRODE MATERIAL AND PREPARATION METHOD THEREOF, BATTERY, AND ENERGY STORAGE DEVICE**

(30) Priority: 24.06.2024 CN 202410823756
(71) Applicant: Xiamen Hithium Energy Storage Technology Co., Ltd., Xiamen, Fujian 361100 (CN)
(72) Inventor: WU, Han, Xiamen, 361100 (CN); WANG, Shiwen, Xiamen, 361100 (CN)
(74) Representative: Viering, Jentschura & Partner mbB Patent- und Rechtsanwälte

(57) **Abstract**

The disclosure provides a sodium iron phosphate pyrophosphate positive-electrode material (100) and a preparation method thereof, a battery (300), and an energy storage device (400). A molar ratio A of sodium element to iron element in the sodium iron phosphate pyrophosphate positive-electrode material (100) of embodiments of the disclosure satisfies 1.36 ≤ *A* ≤ 1.45.

## Description

### TECHNICAL FIELD

The present disclosure relates to the field of energy storage, and in particular, to a sodium iron phosphate pyrophosphate positive-electrode material and a preparation method thereof, a battery, and an energy storage device.

### BACKGROUND

Sodium iron phosphate pyrophosphate Na₄Fe₃(PO₄)₂(P₂O₇), which possesses three-dimensional sodium ion diffusion channels and a sodium superionic conductor (NASICON) structure, exhibits characteristics such as high voltage plateau, high capacity, excellent rate capability, and excellent cycling stability. It shows great potential to become a positive-electrode material for large-scale production in sodium-ion batteries. However, the existing Na₄Fe₃(PO₄)₂(P₂O₇) still has low compacted density.

### SUMMARY

Embodiments of the disclosure provide a positive-electrode active material having high compacted density.

In a first aspect, embodiments of the disclosure provide a sodium iron phosphate pyrophosphate positive-electrode material, and a molar ratio A of sodium element to iron element in the sodium iron phosphate pyrophosphate positive-electrode material satisfies 1.36 ≤ *A* ≤ 1.45.

Further, a molar ratio B of sodium element to phosphorus element in the sodium iron phosphate pyrophosphate positive-electrode material satisfies 1.02 ≤ *B* ≤ 1.05.

Further, a particle size distribution of the sodium iron phosphate pyrophosphate positive-electrode material satisfies 2.5µm ≤ *D*10 ≤ 8.5µm, 8µm ≤ *D*50 ≤ 14µm, 16µm ≤ *D*90 ≤ 23µm, 24µm ≤ *D*99 ≤ 30µm, and 31µm ≤ *D100* ≤ 38µm, where D10 refers to a particle diameter when a cumulative volume fraction in a volume-based distribution reaches 10%, D50 refers to a particle diameter when a cumulative volume fraction in a volume-based distribution reaches 50%, D90 refers to a particle diameter when a cumulative volume fraction in a volume-based distribution reaches 90%, D99 refers to a particle diameter when a cumulative volume fraction in a volume-based distribution reaches 99%, and *D*100 refers to a particle diameter when a cumulative volume fraction in a volume-based distribution reaches 100%.

Further, an average sphericity *α* of the sodium iron phosphate pyrophosphate positive-electrode material satisfies 0.9 ≤ *α* ≤ 1.

Further, the sodium iron phosphate pyrophosphate positive-electrode material includes a sodium iron phosphate pyrophosphate particle and a carbon coating layer, where the carbon coating layer wraps a surface of the sodium iron phosphate pyrophosphate particle, and a mass fraction of the carbon coating layer in the sodium iron phosphate pyrophosphate positive-electrode material ranges from 1.5% to 2.8%.

In a second aspect, embodiments of the disclosure further provide a method for preparing a sodium iron phosphate pyrophosphate positive-electrode material. The method includes the following. A sodium source, a phosphorus source, an iron source, and a carbon source are mixed in a solvent to obtain a slurry, where a molar ratio A of sodium element in the sodium source to iron element in the iron source satisfies 1.36 ≤ *A* ≤ 1.45. The slurry is spray-dried to obtain a precursor powder. The precursor powder is sintered to obtain the sodium iron phosphate pyrophosphate positive-electrode material.

Further, a molar ratio B of sodium element in the sodium source to phosphorus element in the phosphorus source satisfies 1.02 ≤ *B* ≤ 1.05.

Further, when at least one of the sodium source, the phosphorus source, the iron source, or the carbon source is water-insoluble, the sodium source, the phosphorus source, the iron source, and the carbon source are mixed in the solvent to obtain the slurry as follows. The sodium source, the phosphorus source, the iron source, and the carbon source are mixed in water and sand milling is performed to obtain the slurry, where a duration of the sand milling ranges from 0.5h to 4h and a speed of the sand milling ranges from 1000rpm to 4000rpm.

Further, a solid content of the slurry ranges from 30% to 40%.

Further, the slurry is spray-dried to obtain the precursor powder as follows. The slurry is spray-dried at a first temperature T1 to obtain the precursor powder, where T1 satisfies 97°C ≤ T1 ≤ 118°C.

Further, the precursor powder is sintered to obtain the sodium iron phosphate pyrophosphate positive-electrode material as follows. The precursor powder is sintered at a second temperature *T*2 to obtain the sodium iron phosphate pyrophosphate positive-electrode material, where *T2* satisfies 450°C ≤ *T*2 ≤ 620°C.

In a third aspect, embodiments of the disclosure provide a battery. The battery includes an electrolyte, a positive electrode including the sodium iron phosphate pyrophosphate positive-electrode material of embodiments of the disclosure, a separator disposed on one side of the positive electrode, and a negative electrode disposed on one side of the separator facing away from the positive electrode.

In a fourth aspect, embodiments of the disclosure provide an energy storage device. The energy storage device includes a housing and multiple batteries of embodiments of the disclosure, where the multiple batteries are accommodated in the housing.

In the disclosure, by controlling the molar ratio A of sodium element to iron element in the sodium iron phosphate pyrophosphate positive-electrode material, the formation of sodium iron pyrophosphate impurity phases and sodium iron phosphate impurity phases during the preparation process of the sodium iron phosphate pyrophosphate positive-electrode material can be reduced. As a result, the sodium iron phosphate pyrophosphate positive-electrode material has higher sphericity, which leads to high compacted density and processability.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural view of a sodium iron phosphate pyrophosphate positive-electrode material of an embodiment of the disclosure.
FIG. 2 is a schematic structural view of a sodium iron phosphate pyrophosphate positive-electrode material of another embodiment of the disclosure.
FIG. 3 is a schematic flow chart of a method for preparing a sodium iron phosphate pyrophosphate positive-electrode material of an embodiment of the disclosure.
FIG. 4 is a scanning electron microscopy (SEM) image of a sodium iron phosphate pyrophosphate positive-electrode material of embodiment 1 of the disclosure magnified 1000 times.
FIG. 5 is a SEM image of the sodium iron phosphate pyrophosphate positive-electrode material of embodiment 1 of the disclosure magnified 5000 times.
FIG. 6 is a schematic structural view of a battery of an embodiment of the disclosure.
FIG. 7 is a schematic cross-sectional structural view of a battery of an embodiment of the disclosure, taken along line A-A in FIG. 6.
FIG. 8 is a schematic structural view of a positive electrode of an embodiment of the disclosure.
FIG. 9 is a schematic structural view of a negative electrode of an embodiment of the disclosure.
FIG. 10 is a schematic structural view of an energy storage device of an embodiment of the disclosure.

Description of reference signs:
100-sodium iron phosphate pyrophosphate positive-electrode material, 10- sodium iron phosphate pyrophosphate particle, 20-carbon coating layer, 300-battery, 310-positive electrode, 311-positive current collector, 312-positive active layer, 320-separator, 330-negative electrode, 331-negative current collector, 332-negative active layer, 340-shell, 350-end cap assembly, 360-electrolyte, 400-energy storage device, 410-housing.

### DETAILED DESCRIPTION

In order for those of ordinary skill in the art to better understand the solutions of the disclosure, the following will clearly and comprehensively illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompany drawings of the present disclosure are used to distinguish different objects rather than describe a particular order. In addition, the terms "include" and "comprise", as well as variations thereof are intended to cover non-exclusive inclusion. For example, a process, method, system, product, or apparatus including a series of steps or units is not limited to the listed steps or units. Instead, it can optionally include other steps or units that are not listed; alternatively, other steps or units inherent to the process, method, product, or device can be also included either.

The following will describe the technical solutions of embodiments of the disclosure with reference to the accompanying drawings.

It may be noted that, for ease of explanation, in the embodiments of the disclosure, the same reference signs represent the same components. For simplicity, detailed explanations of the same components are omitted in different embodiments.

Sodium iron phosphate pyrophosphate Na₄Fe₃(PO₄)₂(P₂O₇), which possesses three-dimensional sodium ion diffusion channels and a sodium superionic conductor (NASICON) structure, exhibits characteristics such as high voltage plateau, high capacity, excellent rate capability, and excellent cycling stability. It shows great potential to become a positive-electrode material for large-scale production in sodium-ion batteries. However, the existing Na₄Fe₃(PO₄)₂(P₂O₇) still has low compacted density.

Embodiments of the disclosure provide a sodium iron phosphate pyrophosphate positive-electrode material. In the sodium iron phosphate pyrophosphate positive-electrode material (the molecular formula is Na₄Fe₃(PO₄)₂(P₂O₇)), the molar ratio A of sodium element to iron element (abbreviated as Na/Fe ratio) satisfies 1.36 ≤ *A* ≤ 1.45.

The sodium iron phosphate pyrophosphate positive-electrode material of the disclosure may be applied to batteries, such as sodium-ion batteries, as an active material in a positive electrode of a battery.

It may be noted that, the molecular formula Na₄Fe₃(PO₄)₂(P₂O₇) of the sodium iron phosphate pyrophosphate in the disclosure is solely a theoretical molecular formula derived according to the valence state of every constituent element. The ratio of sodium element to iron element and the ratio of sodium element to phosphorus element in the sodium iron phosphate pyrophosphate positive-electrode material may not be interpreted as a quantitative ratio in the molecular formula. The ratio of sodium element to iron element and the ratio of sodium element to phosphorus element in the sodium iron phosphate pyrophosphate positive-electrode material are determined based on the specific descriptions in the corresponding embodiments of the disclosure. This molecular formula may not be construed as limiting the specific elemental composition of the sodium iron phosphate pyrophosphate positive-electrode material.

Specifically, the molar ratio A of sodium element to iron element in the sodium iron phosphate pyrophosphate positive-electrode material may be, but is not limited to, 1.36, 1.37, 1.38, 1.39, 1.40, 1.41, 1.42, 1.43, 1.44, 1.45, etc. If the molar ratio A of sodium element to iron element in the sodium iron phosphate pyrophosphate positive-electrode material is excessively high, sodium iron pyrophosphate impurity phases are prone to form, which reduces the capacity per gram of the sodium iron phosphate pyrophosphate positive-electrode material. Additionally, the mismatch between the sodium iron pyrophosphate impurity phases and the sodium iron phosphate pyrophosphate (Na₄Fe₃(PO₄)₂(P₂O₇)) main phase will diminish the sphericity of the prepared sodium iron phosphate pyrophosphate positive-electrode material. If the molar ratio A of sodium element to iron element in the sodium iron phosphate pyrophosphate positive-electrode material is relatively low, sodium iron phosphate impurity phases are prone to form, which reduces the capacity per gram of the sodium iron phosphate pyrophosphate positive-electrode material. Additionally, the mismatch between the sodium iron phosphate impurity phases and the sodium iron phosphate pyrophosphate main phase will diminish the sphericity of the prepared sodium iron phosphate pyrophosphate positive-electrode material. When the molar ratio A of sodium element to iron element in the sodium iron phosphate pyrophosphate positive-electrode material satisfies 1.36 ≤ *A* ≤ 1.45, the amounts of the sodium iron pyrophosphate impurity phases and the sodium iron phosphate impurity phases in the sodium iron phosphate pyrophosphate positive-electrode material can be minimized as much as possible. Consequently, the sodium iron phosphate pyrophosphate positive-electrode material has higher sphericity, which leads to high compacted density and processability.

In the disclosure, by controlling the molar ratio A of sodium element to iron element in the sodium iron phosphate pyrophosphate positive-electrode material, the formation of sodium iron pyrophosphate impurity phases and sodium iron phosphate impurity phases during the preparation process of the sodium iron phosphate pyrophosphate positive-electrode material can be reduced. As a result, the sodium iron phosphate pyrophosphate positive-electrode material has higher sphericity, which leads to high compacted density and processability.

In some embodiments, a molar ratio B of sodium element to phosphorus element in the sodium iron phosphate pyrophosphate positive-electrode material satisfies 1.02 ≤ *B* ≤ 1.05.

Specifically, the molar ratio B of sodium element to phosphorus element (abbreviated as Na/P ratio) in the sodium iron phosphate pyrophosphate positive-electrode material may be, but is not limited to 1.023, 1.025, 1.028, 1.03, 1.033, 1.035, 1.038, 1.04, 1.043, 1.045, 1.048, 1.05, etc.

It may be noted that, the molar ratio A of sodium element to iron element and the molar ratio B of sodium element to phosphorus element in the sodium iron phosphate pyrophosphate positive-electrode material of the disclosure may both be measured using an inductively coupled plasma optical emission spectroscopy (ICP-OES). During the preparation of the sodium iron phosphate pyrophosphate positive-electrode material, the molar ratios *A* and *B* may be controlled through raw material ratios.

In this embodiment, if the molar ratio B of sodium element to phosphorus element in the sodium iron phosphate pyrophosphate positive-electrode material is excessively high, sodium phosphate impurity phases and sodium pyrophosphate impurity phases are prone to form. Excessive impurity phases will reduce the capacity per gram of the sodium iron phosphate pyrophosphate positive-electrode material. Moreover, the mismatch between the sodium phosphate impurity phases, the sodium pyrophosphate impurity phases, and the Na₄Fe₃(PO₄)₂(P₂O₇) main phase reduces the sphericity of the sodium iron phosphate pyrophosphate positive-electrode material. If the molar ratio *B* of sodium element to phosphorus element in the sodium iron phosphate pyrophosphate positive-electrode material is excessively low, iron phosphate impurity phases and iron pyrophosphate impurity phases are prone to form. Excessive impurity phases will reduce the capacity per gram of the sodium iron phosphate pyrophosphate positive-electrode material. The mismatch between the excessive impurity phases and the Na₄Fe₃(PO₄)₂(P₂O₇) main phase reduces the sphericity of the sodium iron phosphate pyrophosphate positive-electrode material.

In some embodiments, a particle size distribution of the sodium iron phosphate pyrophosphate positive-electrode material satisfies 2.5µm ≤ *D*10 ≤ 8.5µm, 8µm ≤ *D*50 ≤ 14µm, 16µm ≤ D90 ≤ 23µm, 24µm ≤ *D*99 ≤ 30µm, and 31µm ≤ *D*100 ≤ 38µm, where D10 refers to a particle diameter when a cumulative volume fraction in a volume-based distribution reaches 10%, D50 refers to a particle diameter when a cumulative volume fraction in a volume-based distribution reaches 50%, D90 refers to a particle diameter when a cumulative volume fraction in a volume-based distribution reaches 90%, D99 refers to a particle diameter when a cumulative volume fraction in a volume-based distribution reaches 99%, and D100 refers to a particle diameter when a cumulative volume fraction in a volume-based distribution reaches 100%.

A particle size distribution curve of the disclosure may be measured as follows. 0.2g to 0.3g of sodium iron phosphate pyrophosphate positive-electrode material powder is taken and dispersed in 100ml of deionized water via external ultrasound for 5 minutes, and then a laser particle size analyzer is used to perform measurement. Each sample is measured three times, and an average of the three measurements is taken as the measurement result.

Specifically, D10 of the sodium iron phosphate pyrophosphate positive-electrode material may be, but is not limited to 2.5µm, 3µm, 3.5µm, 4µm, 4.5µm, 5µm, 5.5µm, 6µm, 6.5µm, 7µm, 7.5µm, 8µm, 8.5µm, etc. Excessively small or excessively large D10 of the sodium iron phosphate pyrophosphate positive-electrode material will lead to a failure in forming an optimally graded particle size distribution of the sodium iron phosphate pyrophosphate positive-electrode material, thereby reducing the compacted density of the sodium iron phosphate pyrophosphate positive-electrode material.

Specifically, D50 of the sodium iron phosphate pyrophosphate positive-electrode material may be, but is not limited to 8µm, 8.5µm, 9µm, 9.5µm, 10µm, 5µm, 10.5µm, 11µm, 12µm, 13µm, 14µm, etc. Excessively small or excessively large D50 of the sodium iron phosphate pyrophosphate positive-electrode material will lead to a failure in forming an optimally graded particle size distribution of the sodium iron phosphate pyrophosphate positive-electrode material, thereby reducing the compacted density of the positive-electrode active material.

Specifically, D90 of the sodium iron phosphate pyrophosphate positive-electrode material may be, but is not limited to 16µm, 17µm, 18µm, 19µm, 20µm, 21µm, 22µm, 23µm, etc. Excessively small or excessively large D90 of the sodium iron phosphate pyrophosphate positive-electrode material will lead to a failure in forming an optimally graded particle size distribution of the sodium iron phosphate pyrophosphate positive-electrode material, thereby reducing the compacted density of the positive-electrode active material.

Specifically, D99 of the sodium iron phosphate pyrophosphate positive-electrode material may be, but is not limited to 24µm, 24.5µm, 25µm, 25.5µm, 26µm, 26.5µm, 27µm, 27.5µm, 28µm, 28.5µm, 29.0µm, 29.5µm, 30µm, etc. Excessively small or excessively large D99 of the sodium iron phosphate pyrophosphate positive-electrode material will lead to a failure in forming an optimally graded particle size distribution of the sodium iron phosphate pyrophosphate positive-electrode material, thereby reducing the compacted density of the positive-electrode active material.

Specifically, D100 of the sodium iron phosphate pyrophosphate positive-electrode material may be, but is not limited to 31µm, 31.5µm, 32µm, 32.5µm, 33µm, 33.5µm, 34µm, 34.5µm, 35µm, 35.5µm, 36µm, 36.5µm, 37µm, 37.5µm, 38µm, etc. Excessively small or excessively large *D100* of the sodium iron phosphate pyrophosphate positive-electrode material will lead to a failure in forming an optimally graded particle size distribution of the sodium iron phosphate pyrophosphate positive-electrode material, thereby reducing the compacted density of the positive-electrode active material.

In this embodiment, the particle size distribution of the sodium iron phosphate pyrophosphate positive-electrode material particle is designed such that interstices formed by large particles are filled by relatively small particles and pores formed by the relatively small particles are filled by even smaller particles during the particle packing of the sodium iron phosphate pyrophosphate positive-electrode material. In this way, a maximum packing density of the sodium iron phosphate pyrophosphate positive-electrode material may be achieved, resulting in high compacted density of the sodium iron phosphate pyrophosphate positive-electrode material. When there are excessive particles with a diameter lower than 2.5µm in the sodium iron phosphate pyrophosphate positive-electrode material, the size of the sodium iron phosphate pyrophosphate positive-electrode particle is excessively small, which easily leads to low sphericity (sodium iron phosphate pyrophosphate positive-electrode particle having a small size cannot have a proper sphericity). The decrease in sphericity will deteriorate the overall packing effect. When the size of the sodium iron phosphate pyrophosphate positive-electrode particle is excessively large, the processability of the sodium iron phosphate pyrophosphate positive-electrode material is degraded during the production of the positive electrode, and the positive electrode is prone to scratches.

Optionally, an average sphericity *α* (spheroidization degree) of the sodium iron phosphate pyrophosphate positive-electrode material satisfies 0.9 ≤ *α* ≤ 1.

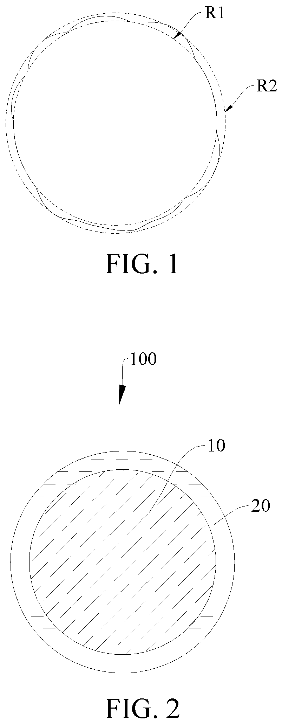

Since it is impossible to prepare perfectly ideal spheres with practical materials, the spheroidized sodium iron phosphate pyrophosphate positive-electrode material exhibits mathematical parameters deviating from ideal spheres. The sphericity in the disclosure is calculated as follows. As illustrated in FIG. 1, two mathematical circles are constructed for a spheroidized Na₄Fe₃(PO₄)₂(P₂O₇) particle (the sodium iron phosphate pyrophosphate positive-electrode material). One is the minimum circumscribed circle of the Na₄Fe₃(PO₄)₂(P₂O₇) (with a radius R1) and the other is the maximum inscribed circle of the Na₄Fe₃(PO₄)₂(P₂O₇) (with a radius R2). The sphericity *α*' of this particle is defined as *α'* = *R*1 / *R*2, and *n* particles (e.g., more than one hundred particles selected from a scanning electron microscope (SEM) image) are selected to calculate the average sphericity of these particles.

Specifically, the average sphericity *α* of the sodium iron phosphate pyrophosphate positive-electrode material may be, but is not limited to 0.9, 0.91, 0.92, 0.93, 0.94, 0.95, 0.96, 0.97, 0.98, 0.99, 1, etc.

When preparing a positive electrode using a positive-electrode material, it is necessary to slurry-coat the positive-electrode material onto a positive current collector, followed by rolling of the positive electrode. When the sphericity of the positive-electrode material is excessively low, the low-sphericity positive-electrode material particles have protruding edges and corners, which hinder the movement and rolling of the positive-electrode material during the rolling process. Consequently, some particles may be jammed at some parts, ultimately reducing the processability and the compacted density of the positive-electrode material, thereby causing surface cracking or even fracture in the positive electrode.

The sodium iron phosphate pyrophosphate positive-electrode material in this embodiment exhibits high average sphericity *α*. When preparing a positive electrode using the sodium iron phosphate pyrophosphate positive-electrode material, the sodium iron phosphate pyrophosphate positive-electrode material with higher sphericity is easier to be moved during the rolling process of the positive electrode, enabling more uniform packing on a positive current collector of the positive electrode. Small particles are easier to be moved into interstices between large particles, and the particles can achieve tighter packing. Consequently, the sodium iron phosphate pyrophosphate positive-electrode material has high compacted density and excellent processability.

Reference is made to FIG. 2, in some embodiments, a sodium iron phosphate pyrophosphate positive-electrode material 100 includes a sodium iron phosphate pyrophosphate particle 10 and a carbon coating layer 20, where the carbon coating layer 20 wraps a surface of the sodium iron phosphate pyrophosphate particle 10, and a mass fraction of the carbon coating layer 20 in the sodium iron phosphate pyrophosphate positive-electrode material 100 ranges from 1.5% to 2.8%.

In embodiments of the disclosure, when it comes to a value ranging from *a* to *b,* it is indicated that the value may be any value between *a* and *b,* including endpoint values *a* and *b,* unless otherwise specified.

Specifically, in the sodium iron phosphate pyrophosphate positive-electrode material 100, the mass fraction of the carbon coating layer 20 may be, but is not limited to 1.5%, 1.6%, 1.8%, 2.0%, 2.2%, 2.4%, 2.6%, 2.8%, etc.

In this embodiment, the sodium iron phosphate pyrophosphate particle 10 exhibit poor conductivity. By providing the carbon coating layer 20, the conductivity of the sodium iron phosphate pyrophosphate positive-electrode material 100 can be improved. When the mass fraction of the carbon coating layer 20 in the sodium iron phosphate pyrophosphate positive-electrode material 100 is excessively low, the conductivity of the sodium iron phosphate pyrophosphate positive-electrode material 100 is reduced, thereby degrading the electrochemical performance of the sodium iron phosphate pyrophosphate positive-electrode material 100. When the mass fraction of the carbon coating layer 20 in the sodium iron phosphate pyrophosphate positive-electrode material 100 is excessively high, carbon tends to aggregate and form clusters on the surface of the sodium iron phosphate pyrophosphate particle 10, which reduces the sphericity of the sodium iron phosphate pyrophosphate positive-electrode material 100, thereby diminishing the processability and the compacted density of the sodium iron phosphate pyrophosphate positive-electrode material 100.

In embodiments of the disclosure, the powder compacted density of the sodium iron phosphate pyrophosphate positive-electrode material 100 ranges from 2.05g/cm³ to 2.35g/cm³. Specifically, it may be but is not limited to 2.05g/cm³, 2.10g/cm³, 2.15g/cm³, 2.20g/cm³, 2.25g/cm³, 2.30g/cm³, 2.35g/cm³, etc.

In the disclosure, a powder compacted density testing method is as follows. 2g to 3g of Na₄Fe₃(PO₄)₂(P₂O₇) powder is added into a mold with a diameter of 13mm, a pressure of 3 tons is applied and held for 10 seconds before release. The mass and volume of a compacted cylinder are measured, and the powder compacted density is calculated.

The electrode-level compacted density (after being prepared as a positive electrode) of the sodium iron phosphate pyrophosphate positive-electrode material 100 of embodiments of the disclosure ranges from 2.1g/cm³ to 2.4g/cm³. Specifically, it may be but is not limited to 2.10g/cm³, 2.15g/cm³, 2.20g/cm³, 2.25g/cm³, 2.30g/cm³, 2.35g/cm³, 2.4g/cm³, etc.

In the disclosure, an electrode-level compacted density testing method is as follows. The thickness of an aluminum foil is pre-measured, the aluminum foil is cut into a 12mm disc, and the mass of the 12mm disc is pre-measured. The thickness of a positive electrode prepared from the sodium iron phosphate pyrophosphate positive-electrode material 100 is measured, the positive electrode is cut into a 12mm disc, and the mass of the 12mm disc is measured. The mass and volume of the sodium iron phosphate pyrophosphate positive-electrode material 100 on the positive electrode are calculated, and thus the compacted density of the sodium iron phosphate pyrophosphate positive-electrode material 100 on the positive electrode is calculated.

The sodium iron phosphate pyrophosphate positive-electrode material 100 of embodiments of the disclosure may be prepared by the methods described in the following embodiments of the disclosure. Additionally, it may also be prepared by other methods. The preparation methods in embodiments of the disclosure only represent one or more preparation methods for the sodium iron phosphate pyrophosphate positive-electrode material 100 of the disclosure, and may not be construed as limiting the sodium iron phosphate pyrophosphate positive-electrode material 100 provided in embodiments of the disclosure.

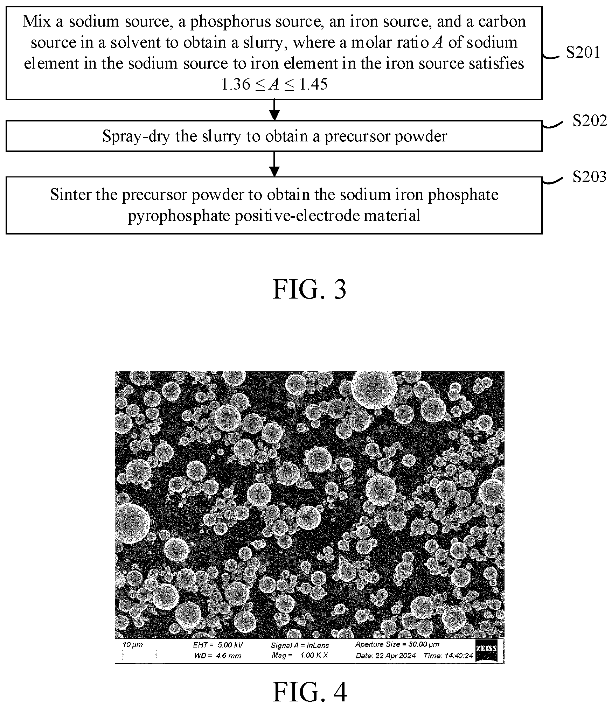

Reference is made to FIG. 3. Embodiments of the disclosure provide a method for preparing a sodium iron phosphate pyrophosphate positive-electrode material 100. The method includes the following.

At S201, a sodium source, a phosphorus source, an iron source, and a carbon source are mixed in a solvent to obtain a slurry, where a molar ratio A of sodium element in the sodium source to iron element in the iron source satisfies 1.36 ≤ *A* ≤ 1.45.

Specifically, the molar ratio A of sodium element in the sodium source to iron element in the iron source may be, but is not limited to 1.36, 1.37, 1.38, 1.39, 1.40, 1.41, 1.42, 1.43, 1.44, 1.45, etc. If the molar ratio A of sodium element in the sodium source to iron element in the iron source is excessively high, sodium iron pyrophosphate impurity phases are prone to form, which reduces the capacity per gram of the sodium iron phosphate pyrophosphate positive-electrode material 100. Additionally, the mismatch between the sodium iron pyrophosphate impurity phases and the sodium iron phosphate pyrophosphate (Na₄Fe₃(PO₄)₂(P₂O₇)) main phase will diminish the sphericity of the prepared sodium iron phosphate pyrophosphate positive-electrode material 100. If the molar ratio A of sodium element in the sodium source to iron element in the iron source is relatively low, sodium iron phosphate impurity phases are prone to form, which reduces the capacity per gram of the sodium iron phosphate pyrophosphate positive-electrode material 100. Additionally, the mismatch between the sodium iron phosphate impurity phases and the sodium iron phosphate pyrophosphate main phase will diminish the sphericity of the prepared sodium iron phosphate pyrophosphate positive-electrode material. When the molar ratio A of sodium element in the sodium source to iron element in the iron source satisfies 1.36 ≤ *A* ≤ 1.45, the amounts of the sodium iron pyrophosphate impurity phases and the sodium iron phosphate impurity phases in the sodium iron phosphate pyrophosphate positive-electrode material 100 can be minimized as much as possible. Consequently, the sodium iron phosphate pyrophosphate positive-electrode material 100 has higher sphericity, which leads to high compacted density and processability.

Optionally, the sodium source may include at least one of sodium dihydrogen phosphate, sodium pyrophosphate, sodium carbonate, sodium acetate, amorphous NaₓFe_{y}P_{z}Oₖ compounds with non-fixed compositions, these compounds containing crystal water, etc.

Optionally, the phosphorus source may include at least one of sodium dihydrogen phosphate, sodium pyrophosphate, ammonium dihydrogen phosphate, amorphous NaₓFe_{y}P_{z}Oₖ compounds with non-fixed compositions, these compounds containing crystal water, etc.

It may be understood that, the same compound can serve as both the sodium source and the phosphorus source, such as sodium dihydrogen phosphate, and sodium pyrophosphate.

Optionally, the iron source may include at least one of ferrous oxalate, iron nitrate, ferrous sulfate, amorphous NaₓFe_{y}P_{z}Oₖ compounds with non-fixed compositions, these compounds containing crystal water, etc. For example, ferrous oxalate may be replaced with ferrous oxalate dihydrate.

Optionally, the carbon source may include at least one of glucose, sucrose, starch, polyethylene glycol, ascorbic acid, citric acid, carbon nanotubes, graphene, etc. The sodium iron phosphate pyrophosphate particle 10 prepared in the disclosure exhibit poor conductivity. Adding a carbon source during the preparation of the sodium iron phosphate pyrophosphate particle 10 can improve the conductivity of the sodium iron phosphate pyrophosphate particle 10.

At S202, the slurry is spray-dried to obtain a precursor powder.

At S203, the precursor powder is sintered to obtain the sodium iron phosphate pyrophosphate positive-electrode material 100.

In the method for preparing the sodium iron phosphate pyrophosphate positive-electrode material 100 of embodiments of the disclosure, by controlling the molar ratio A of sodium element in the sodium source to iron element in the iron source to satisfy 1.36 ≤ *A* ≤ 1.45, the amount of sodium iron pyrophosphate impurity phases and sodium iron phosphate impurity phases in the prepared sodium iron phosphate pyrophosphate positive-electrode material 100 can be minimized as much as possible, thereby avoiding a decrease in the sphericity of the sodium iron phosphate pyrophosphate positive-electrode material 100 due to incompatibility between impurity phases and the sodium iron phosphate pyrophosphate positive-electrode material 100 main phase. As a result, the prepared sodium iron phosphate pyrophosphate positive-electrode material 100 has higher sphericity, which leads to high compacted density and processability.

In some embodiments, a molar ratio B of sodium element in the sodium source to phosphorus element in the phosphorus source satisfies 1.02 ≤ *B* ≤ 1.05.

Specifically, the molar ratio B of sodium element in the sodium source to phosphorus element in the phosphorus source (Na/P ratio) may be, but is not limited to 1.023, 1.025, 1.028, 1.03, 1.033, 1.035, 1.038, 1.04, 1.043, 1.045, 1.048, 1.05, etc.

In the embodiment, if the molar ratio B of sodium element in the sodium source to phosphorus element in the phosphorus source is excessively high, sodium phosphate impurity phases and sodium pyrophosphate impurity phases are prone to form. Excessive impurity phases will reduce the capacity per gram of the sodium iron phosphate pyrophosphate positive-electrode material 100. Moreover, the mismatch between the sodium phosphate impurity phases, the sodium pyrophosphate impurity phases, and the Na₄Fe₃(PO₄)₂(P₂O₇) main phase reduces the sphericity of the sodium iron phosphate pyrophosphate positive-electrode material 100. If the molar ratio B of sodium element in the sodium source to phosphorus element in the phosphorus source is excessively low, iron phosphate impurity phases and iron pyrophosphate impurity phases are prone to form. Excessive impurity phases will reduce the capacity per gram of the sodium iron phosphate pyrophosphate positive-electrode material 100. The mismatch between the excessive impurity phases and the Na₄Fe₃(PO₄)₂(P₂O₇) main phase reduces the sphericity of the sodium iron phosphate pyrophosphate positive-electrode material 100.

In some embodiments, when at least one of the sodium source, the phosphorus source, the iron source, or the carbon source is water-insoluble, the sodium source, the phosphorus source, the iron source, and the carbon source are mixed in the solvent to obtain the slurry as follows. The sodium source, the phosphorus source, the iron source, and the carbon source are mixed in water and sand milling is performed to obtain the slurry, where a duration of the sand milling ranges from 0.5h to 4h and a speed of the sand milling ranges from 1000rpm to 4000rpm.

In this embodiment, prior to spray drying, the raw materials (i.e., sodium source, phosphorus source, iron source, and carbon source) are first subject to sand milling and mixing. Sand milling can reduce the particle size of the raw materials, providing a prerequisite for the formation of the sodium iron phosphate pyrophosphate. Additionally, sand milling ensures thorough mixing of soluble and insoluble substances in the raw materials, avoiding the increase of the probability of impurity phases forming in the final sodium iron phosphate pyrophosphate due to non-uniform mixing of the raw materials when multiple insoluble raw materials are present.

Specifically, the duration of the sand milling may be, but is not limited to 0.5h, 1h, 1.5h, 2h, 2.5h, 3h, 3.5h, 4h, etc. If the duration of the sand milling is excessively short, the particle size of insoluble raw materials in the sodium source, the phosphorus source, the iron source, and the carbon source will be excessively large. This may lead to localized protruding and growth of crystals during subsequent sintering, thereby reducing the sphericity of the prepared sodium iron phosphate pyrophosphate positive-electrode material 100. If the duration of the sand milling is excessively long, production efficiency will decrease.

Specifically, the speed of the sand milling may be, but is not limited to, 1000rpm, 1500rpm, 2000rpm, 2500rpm, 3000rpm, 3500rpm, 4000rpm, etc. If the speed of the sand milling is excessively low, the particle size of insoluble raw materials in the sodium source, the phosphorus source, the iron source, and the carbon source will be excessively large. This may lead to localized protruding and growth of crystals during subsequent sintering, thereby reducing the sphericity of the prepared sodium iron phosphate pyrophosphate positive-electrode material 100. If the speed is excessively high, the slurry is prone to splashing.

In some embodiments, a solid content of the slurry ranges from 30% to 40%.

Specifically, the solid content of the slurry may be, but is not limited to 30%, 31%, 32%, 33%, 34%, 35%, 36%, 37%, 38%, 39%, 40%, etc.

In this embodiment, if the solid content of the slurry is excessively low, the material cannot rapidly and effectively condense into a spherical morphology during the spray drying stage, affecting the sphericity of the finally prepared sodium iron phosphate pyrophosphate positive-electrode material 100. If the solid content of the slurry is excessively high, it will cause significant difficulty for sand milling in the sand milling stage. Additionally, during the spray drying stage, the material forms into spheres quickly, leaving insufficient time to develop highly spherical shapes, thereby reducing the sphericity of the obtained precursor powder and consequently reducing the sphericity of the finally prepared sodium iron phosphate pyrophosphate positive-electrode material 100.

In some embodiments, the slurry is spray-dried to obtain the precursor powder as follows. The slurry is spray-dried at a first temperature T1 to obtain the precursor powder, where T1 satisfies 97°C ≤ T1 ≤ 118°C.

Specifically, the first temperature for spray-drying may be, but is not limited to 97°C, 98°C, 100°C, 101°C, 102°C, 103°C, 104°C, 105°C, 106°C, 107°C, 108°C, 110°C, 112°C, 114°C, 116°C, 118°C, etc.

In this embodiment, if the temperature for spray drying the slurry is excessively low, the solvent (e.g., water) evaporates slowly, resulting in an excessively low sphere-forming speed of the precursor powder. This may lead to hollow or collapsed spherical morphologies, which affects the processability and the compacted density of the finally prepared sodium iron phosphate pyrophosphate positive-electrode material 100. If the temperature for spray drying the slurry is excessively high, the solvent (e.g., water) evaporates rapidly, resulting in an excessively high sphere-forming speed of the precursor powder, thereby reducing the sphericity of the formed precursor powder.

Further, the range of the first temperature T1 is 100°C ≤ T1 ≤ 107°C. When the first temperature falls within this range, a moderate sphere-forming speed may be achieved when spray drying the slurry, enabling the prepared precursor powder to have high sphericity. This also better avoids the formation of hollow or collapsed precursor powder, thereby ensuring that the finally prepared sodium iron phosphate pyrophosphate positive-electrode material 100 exhibits higher sphericity, better processability, and greater compacted density.

In some embodiments, the precursor powder is sintered to obtain the sodium iron phosphate pyrophosphate positive-electrode material 100 as follows. The precursor powder is sintered at a second temperature *T*2 to obtain the sodium iron phosphate pyrophosphate positive-electrode material 100, where *T2* satisfies 450°C ≤ *T*2 ≤ 620°C.

Optionally, the sintering is performed under the protection of an inert atmosphere. Optionally, the inert atmosphere includes at least one of helium, nitrogen, or argon.

Specifically, the second temperature for sintering the precursor powder may be, but is not limited to 450°C, 480°C, 500°C, 520°C, 540°C, 560°C, 580°C, 600°C, etc. When synthesizing the sodium iron phosphate pyrophosphate, if carbohydrates such as glucose are used as the carbon source, excessively low temperature will result in insufficient carbonization of the carbon source, leading to excessively high powder resistivity of the synthesized sodium iron phosphate pyrophosphate. This reduces the capacity per gram and the rate performance of the synthesized sodium iron phosphate pyrophosphate. Additionally, if the second temperature for sintering the precursor powder is excessively low, the crystallinity of the sodium iron phosphate pyrophosphate deteriorates, thereby reducing the capacity per gram and the cycling performance of the sodium iron phosphate pyrophosphate. If the second temperature for sintering the precursor powder is excessively high, sodium iron phosphate impurity phases and sodium iron pyrophosphate impurity phases are prone to form, thereby reducing the electrochemical performance of the sodium iron phosphate pyrophosphate positive-electrode material 100. Furthermore, the mismatch between the sodium phosphate impurity phases, the sodium pyrophosphate impurity phases, and the sodium iron phosphate pyrophosphate main phase reduces the sphericity of the sodium iron phosphate pyrophosphate positive-electrode material 100. Moreover, excessively high second temperature for sintering the precursor powder also promotes the overgrowth of primary particles of the sodium iron phosphate pyrophosphate into polyhedrons with specific orientations, thereby reducing the sphericity of the sodium iron phosphate pyrophosphate positive-electrode material 100.

Optionally, the duration for sintering the precursor powder may range from 2h to 48h. Specifically, the duration for sintering the precursor powder may be, but is not limited to, 2h, 4h, 8h, 12h, 16h, 20h, 24h, 28h, 32h, 36h, 40h, 44h, 48h, etc. If the duration for sintering the precursor powder is excessively short, the crystallinity of the prepared sodium iron phosphate pyrophosphate positive-electrode material 100 will be excessively low, resulting in poor electrochemical performance. Additionally, the carbonization degree of the carbon source decreases, thereby reducing the conductivity of the sodium iron phosphate pyrophosphate positive-electrode material 100. If the duration for sintering the precursor powder is excessively long, primary particles of the sodium iron phosphate pyrophosphate may easily overgrow into polyhedrons with specific orientations, thereby reducing the sphericity of the sodium iron phosphate pyrophosphate positive-electrode material 100.

The sodium iron phosphate pyrophosphate positive-electrode material 100 of embodiments of the disclosure is further described below through specific embodiments.

Embodiments 1 to 7 and comparative embodiments 1 to 4 are described below.

The sodium iron phosphate pyrophosphate positive-electrode material 100 of each embodiment and each comparative embodiment is prepared via the following operations.
(1) Sodium pyrophosphate, ammonium dihydrogen phosphate, ferrous oxalate dihydrate, glucose, and water in a preset ratio are uniformly mixed to obtain a slurry with a solid content of 35%. The Na/Fe ratio *A* and Na/P ratio *B* in the raw materials of each embodiment and each comparative embodiment are illustrated in table 1.
(2) The slurry is spray-dried at 105°C to obtain a precursor powder.
(3) The precursor powder is sintered in a furnace under nitrogen protection at 540°C for 12h. After cooling, the sodium iron phosphate pyrophosphate positive-electrode material 100 is obtained.

Embodiments 8 to 21 and comparative embodiments 5 to 10 are described below.

The sodium iron phosphate pyrophosphate positive-electrode material 100 of each embodiment and each comparative embodiment is prepared via the following operations.
(1) 175g of sodium pyrophosphate, 142.5g of ammonium dihydrogen phosphate, 341g of ferrous oxalate dihydrate (with a Na/Fe ratio *A* of 1.389 and a Na/P ratio *B* of 1.03), 20g of glucose, and water are uniformly mixed to obtain a slurry. The solid content of the slurry of each embodiment and each comparative embodiment is illustrated in table 2.
(2) The slurry is spray-dried to obtain a precursor powder. The temperature for spray-drying in each embodiment and each comparative embodiment is illustrated in table 2.
(3) The precursor powder is sintered in a furnace under nitrogen protection for 12h. After cooling, the sodium iron phosphate pyrophosphate positive-electrode material 100 is obtained. The temperature for sintering in each embodiment and each comparative embodiment is illustrated in table 2.

The positive-electrode active material of each embodiment and each comparative embodiment is used to prepare a positive-electrode slurry. The positive-electrode slurry is coated onto an aluminum foil (positive current collector), followed by drying, cold pressing, slitting, and cutting to obtain a positive electrode for using.

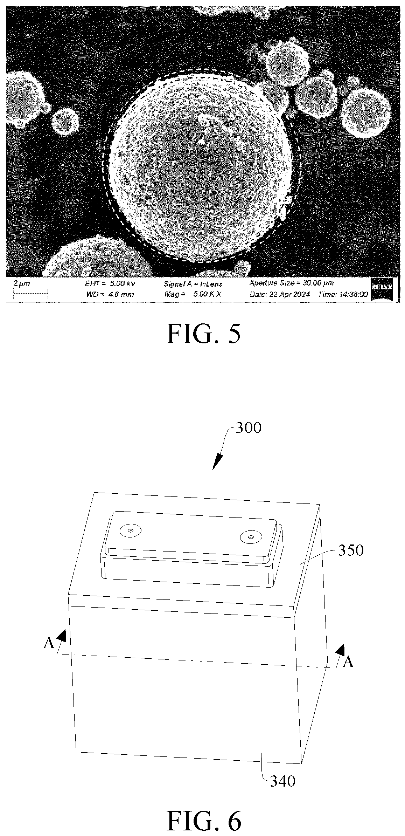

The sphericity, powder compacted density, and positive electrode compacted density of the positive-electrode active material of each embodiment and each comparative embodiment are tested. Testing results are illustrated in table 3.
(1) Sphericity test: more than one hundred particles of the sodium iron phosphate pyrophosphate positive-electrode material 100 are selected from a SEM image, and the average sphericity of these particles is calculated. The SEM image of the sodium iron phosphate pyrophosphate positive-electrode material 100 of embodiment 1 magnified 1000 times is illustrated in FIG. 4, and the SEM image of the sodium iron phosphate pyrophosphate positive-electrode material 100 of embodiment 1 magnified 5000 times is illustrated in FIG. 5.
(2) Powder compacted density test: 2g to 3g of Na₄Fe₃(PO₄)₂(P₂O₇) powder is added into a mold with a diameter of 13mm, a pressure of 3 tons is applied and held for 10 seconds before release. The mass and volume of a compacted cylinder are measured, and the powder compacted density is calculated.
(3) Positive electrode compacted density test: the thickness and mass of a 12mm aluminum foil disc are measured. The thickness of the positive electrode prepared from the positive-electrode active material in each embodiment and each comparative embodiment is measured, the positive electrode is cut into a 12mm disc, and the mass of the 12mm disc is measured. The mass and volume of the positive-electrode active material on the positive electrode are calculated, and thus the compacted density of the positive-electrode active material after being prepared as the positive electrode is calculated.
(4) Capacity per gram test: the positive electrode is cut into a 12mm-diameter disc and weighed, and the mass of the positive current collector is subtracted to obtain the mass of the positive-electrode active material. The positive electrode disc is assembled into a button battery using a model 2032 button battery shell (with a 14mm metal sodium sheet as the negative electrode, 1M NaClO₄ dissolved in ethylene carbonate/diethyl carbonate (EC/DEC) as the electrolyte, and a fiberglass diaphragm as the separator). The testing process includes: resting for 10h, charging at 0.1C to 3.5V, resting for 10min, then discharging at 0.1C to 1.5V. The charge capacity per gram and discharge capacity per gram are obtained.
(5) Capacity of a positive electrode = capacity per gram × corresponding electrode compacted density.

**Table 1: performance parameters of sodium iron phosphate pyrophosphates in embodiments 1 to 7 and comparative embodiments 1 to 4**

| Example | Na/Fe ratio *A* | Na/P ratio *B* | *D10* (µm) | *D50* (µm) | *D*90 (µm) | *D*99 (µm) | *D*100 (µm) |
|---|---|---|---|---|---|---|---|
| Embodiment 1 | 1.36 | 1.035 | 5.4 | 10.3 | 18.6 | 26.6 | 34.8 |
| Embodiment 2 | 1.39 | 1.035 | 5.2 | 10.1 | 18.1 | 26.0 | 33.2 |
| Embodiment 3 | 1.42 | 1.035 | 4.7 | 9.8 | 17.6 | 25.7 | 32.4 |
| Embodiment 4 | 1.45 | 1.035 | 4.1 | 9.2 | 16.8 | 24.1 | 31.7 |
| Embodiment 5 | 1.39 | 1.02 | 6.1 | 11.9 | 20.3 | 28.3 | 36.1 |
| Embodiment 6 | 1.39 | 1.03 | 5.7 | 10.8 | 19.6 | 27.7 | 35.8 |
| Embodiment 7 | 1.39 | 1.05 | 5.2 | 9.6 | 17.2 | 25.0 | 33.3 |
| Comparative embodiment 1 | 1.3 | 1.035 | 5.1 | 9.4 | 17.0 | 24.7 | 32.7 |
| Comparative embodiment 2 | 1.5 | 1.035 | 3.1 | 8.1 | 12.9 | 17.6 | 23.8 |
| Comparative embodiment 3 | 1.39 | 1 | 4.1 | 9.1 | 11.9 | 19.6 | 25.8 |
| Comparative embodiment 4 | 1.39 | 1.1 | 8.1 | 17.9 | 29.6 | 33.8 | 47.5 |

**Table 2: preparation processing and performance parameters of sodium iron phosphate pyrophosphate positive-electrode materials 100 in embodiments 8 to 21 and comparative embodiments 5 to 10**

| Example | Solid content of slurry (%) | Temperature for spray drying (°C) | Temperature for sintering (°C) | *D*10 (µm) | *D*50 (µm) | *D*90 (µm) | *D*99 (µm) | *D*100 (µm) |
|---|---|---|---|---|---|---|---|---|
| Embodiment 8 | 30 | 105 | 540 | 3.6 | 8.7 | 16.3 | 23.6 | 31.2 |
| Embodiment 9 | 33 | 105 | 540 | 5.2 | 10.1 | 18.1 | 26.0 | 33.2 |
| Embodiment 10 | 37 | 105 | 540 | 5.8 | 11.0 | 19.6 | 27.5 | 34.7 |
| Embodiment 11 | 40 | 105 | 540 | 6.2 | 11.8 | 20.4 | 28.1 | 36.3 |
| Embodiment 12 | 35 | 97 | 540 | 5.6 | 11.4 | 19.8 | 27.8 | 35.6 |
| Embodiment 13 | 35 | 100 | 540 | 5.2 | 10.3 | 19.1 | 27.2 | 35.3 |
| Embodiment 14 | 35 | 110 | 540 | 4.7 | 9.1 | 16.7 | 24.5 | 32.8 |
| Embodiment 15 | 35 | 114 | 540 | 4.2 | 9.3 | 17.1 | 25.2 | 31.9 |
| Embodiment 16 | 35 | 118 | 540 | 3.6 | 8.7 | 16.3 | 23.6 | 31.2 |
| Embodiment 17 | 35 | 105 | 450 | 4.1 | 9.2 | 16.8 | 24.1 | 31.7 |
| Embodiment 18 | 35 | 105 | 480 | 4.7 | 9.8 | 17.6 | 25.7 | 32.4 |
| Embodiment 19 | 35 | 105 | 510 | 5.2 | 10.1 | 18.1 | 26 | 33.2 |
| Embodiment 20 | 35 | 105 | 580 | 5.4 | 10.3 | 18.6 | 26.6 | 34.8 |
| Embodiment 21 | 35 | 105 | 620 | 5.7 | 10.8 | 19.3 | 27.8 | 35.6 |
| Comparative embodiment 5 | 25 | 105 | 540 | 2.8 | 7.9 | 15.5 | 22.8 | 30.4 |
| Comparative embodiment 6 | 45 | 105 | 540 | 8.1 | 13.9 | 22.3 | 30.3 | 38.1 |
| Comparative embodiment 7 | 35 | 90 | 540 | 1.6 | 6.7 | 14.3 | 19.6 | 23.2 |
| Comparative embodiment 8 | 35 | 125 | 540 | 7.8 | 13.6 | 22 | 30 | 37.8 |
| Comparative embodiment 9 | 35 | 105 | 400 | 8.6 | 16.9 | 24.9 | 33.1 | 36.4 |
| Comparative embodiment 10 | 35 | 105 | 660 | 12.3 | 20.6 | 28.6 | 36.8 | 40.1 |

**Table 3: parameters such as sphericity and compacted density of sodium iron phosphate pyrophosphate positive-electrode materials 100 prepared in embodiments and comparative embodiments**

| Example | Sphericity | Powder compacted density (g/cm³) | Electrode-level compacted density (g/cm³) | Capacity per gram (0.1C) (mAh/g) | Capacity of positive electrode (0.1C) (mAh/cm³) |
|---|---|---|---|---|---|
| Embodiment 1 | 0.98 | 2.35 | 2.4 | 109 | 262 |
| Embodiment 2 | 0.96 | 2.31 | 2.36 | 108 | 255 |
| Embodiment 3 | 0.93 | 2.28 | 2.35 | 108 | 254 |
| Embodiment 4 | 0.91 | 2.31 | 2.36 | 106 | 250 |
| Embodiment 5 | 0.92 | 2.35 | 2.4 | 102 | 245 |
| Embodiment 6 | 0.96 | 2.31 | 2.36 | 106 | 250 |
| Embodiment 7 | 0.94 | 2.28 | 2.35 | 105 | 247 |
| Embodiment 8 | 0.93 | 2.27 | 2.34 | 109 | 255 |
| Embodiment 9 | 0.96 | 2.31 | 2.37 | 109 | 258 |
| Embodiment 10 | 0.95 | 2.30 | 2.35 | 109 | 256 |
| Embodiment 11 | 0.92 | 2.31 | 2.36 | 109 | 257 |
| Embodiment 12 | 0.93 | 2.30 | 2.28 | 109 | 249 |
| Embodiment 13 | 0.96 | 2.31 | 2.36 | 109 | 257 |
| Embodiment 14 | 0.94 | 2.27 | 2.34 | 109 | 255 |
| Embodiment 15 | 0.93 | 2.26 | 2.33 | 109 | 254 |
| Embodiment 16 | 0.90 | 2.25 | 2.31 | 109 | 252 |
| Embodiment 17 | 0.97 | 2.31 | 2.36 | 106 | 250 |
| Embodiment 18 | 0.95 | 2.28 | 2.35 | 104 | 244 |
| Embodiment 19 | 0.94 | 2.26 | 2.33 | 101 | 235 |
| Embodiment 20 | 0.91 | 2.22 | 2.30 | 99 | 228 |
| Embodiment 21 | 0.9 | 2.21 | 2.27 | 95 | 216 |
| Comparative embodiment 1 | 0.85 | 2.01 | 2.09 | 92 | 192 |
| Comparative embodiment 2 | 0.81 | 1.95 | 2.02 | 87 | 176 |
| Comparative embodiment 3 | 0.79 | 1.93 | 2.04 | 91 | 186 |
| Comparative embodiment 4 | 0.72 | 1.92 | 2.01 | 82 | 165 |
| Comparative embodiment 5 | 0.65 | 1.93 | 2.00 | 106 | 212 |
| Comparative embodiment 6 | 0.69 | 1.95 | 2.03 | 106 | 215 |
| Comparative embodiment 7 | 0.81 | 1.99 | 2.00 | 106 | 212 |
| Comparative embodiment 8 | 0.74 | 1.93 | 1.98 | 106 | 210 |
| Comparative embodiment 9 | 0.87 | 2.03 | 2.05 | 101 | 207 |
| Comparative embodiment 10 | 0.82 | 1.97 | 2.02 | 65 | 131 |

From tables 1 to 3 and the test results of embodiments 1 to 21, it can be seen that the sodium iron phosphate pyrophosphate positive-electrode material 100 prepared in embodiments of the disclosure exhibits high sphericity (all greater than or equal to 0.9), high powder compacted density (all greater than or equal to 2.21g/cm³), and high electrode-level compacted density (all greater than or equal to 2.27g/cm³), as well as high capacity per gram (all greater than or equal to 95mAh/g) and high electrode capacity (all greater than or equal to 216mAh/cm³).

From tables 1 and 3 and the test data of embodiments 1 to 4 and comparative embodiments 1 and 2, it can be seen that when the molar ratio A of sodium element to iron element in the sodium iron phosphate pyrophosphate positive-electrode material 100 satisfies 1.36 ≤ *A* ≤ 1.45, the sodium iron phosphate pyrophosphate positive-electrode material 100 achieves high sphericity, thereby enabling high powder compacted density and high electrode-level compacted density of the sodium iron phosphate pyrophosphate positive-electrode material 100. Furthermore, when the molar ratio A of sodium element to iron element in the sodium iron phosphate pyrophosphate positive-electrode material 100 satisfies 1.36 ≤ *A* ≤ 1.45, the formation of impurity phases in the sodium iron phosphate pyrophosphate positive-electrode material 100 may be reduced, resulting in high capacity per gram and high electrode capacity of the sodium iron phosphate pyrophosphate positive-electrode material 100. Both excessively low and excessively high molar ratio A of sodium element to iron element in the sodium iron phosphate pyrophosphate positive-electrode material 100 will reduce the sphericity of the sodium iron phosphate pyrophosphate positive-electrode material 100, thereby reducing the powder compacted density and the electrode-level compacted density of the sodium iron phosphate pyrophosphate positive-electrode material 100. Moreover, the formation of impurity phases in the sodium iron phosphate pyrophosphate positive-electrode material 100 may be increased, thereby reducing the capacity per gram and the electrode capacity of the sodium iron phosphate pyrophosphate positive-electrode material 100.

From tables 1 and 3 and the test results of embodiment 2, embodiments 5 to 7, and comparative embodiments 3 and 4, it can be seen that when the molar ratio B of sodium element to phosphorus element in the sodium iron phosphate pyrophosphate positive-electrode material 100 satisfies 1.02 ≤ *B* ≤ 1.05, the sodium iron phosphate pyrophosphate positive-electrode material 100 achieves high sphericity, thereby enabling high powder compacted density and high electrode-level compacted density of the sodium iron phosphate pyrophosphate positive-electrode material 100. Furthermore, when the molar ratio B of sodium element to phosphorus element in the sodium iron phosphate pyrophosphate positive-electrode material 100 satisfies 1.02 ≤ *B* ≤ 1.05, the formation of impurity phases in the sodium iron phosphate pyrophosphate positive-electrode material 100 may be reduced, resulting in high capacity per gram and high electrode capacity of the sodium iron phosphate pyrophosphate positive-electrode material 100. Both excessively low amd excessively high molar ratio B of sodium element to phosphorus element in the sodium iron phosphate pyrophosphate positive-electrode material 100 will reduce the sphericity of the sodium iron phosphate pyrophosphate positive-electrode material 100, thereby reducing the powder compacted density and the electrode-level compacted density of the sodium iron phosphate pyrophosphate positive-electrode material 100. Moreover, the formation of impurity phases in the sodium iron phosphate pyrophosphate positive-electrode material 100 may be increased, thereby reducing the capacity per gram and the electrode capacity of the sodium iron phosphate pyrophosphate positive-electrode material 100.

From the test results of embodiments 8 to 11 and comparative embodiments 5 and 6, it can be seen that before spray drying, when the solid content of the slurry is maintained between 30% to 40%, the prepared sodium iron phosphate pyrophosphate positive-electrode material 100 has higher sphericity. When the solid content ranges from 30% to 40%, the sphericity of the sodium iron phosphate pyrophosphate positive-electrode material 100 first increases and then decreases with the increase of the solid content. Both excessively high and excessively low solid contents will reduce the sphericity of the prepared sodium iron phosphate pyrophosphate positive-electrode material 100, while also reducing the powder compacted density, electrode-level compacted density, capacity per gram, and electrode capacity of the prepared sodium iron phosphate pyrophosphate positive-electrode material 100.

From the test results of embodiments 12 to 16 and comparative embodiments 7 and 8, it can be seen that when the first temperature T1 for spray drying satisfies 97°C ≤ T1 ≤ 118°C, the prepared sodium iron phosphate pyrophosphate positive-electrode material 100 exhibits higher sphericity. When the first temperature T1 for spray drying satisfies 97°C ≤ T1 ≤ 118°C, the sphericity of the prepared sodium iron phosphate pyrophosphate positive-electrode material 100 first increases and then decreases with the increase of the first temperature. Both excessively high and excessively low first temperatures T1 will reduce the sphericity of the prepared sodium iron phosphate pyrophosphate positive-electrode material 100, while also reducing the powder compacted density, electrode-level compacted density, capacity per gram, and electrode capacity of the prepared sodium iron phosphate pyrophosphate positive-electrode material 100.

From the test results of embodiments 17 to 21 and comparative embodiments 9 to 10, it can be seen that when the second temperature *T*2 for sintering satisfies 450°C ≤ *T*2 ≤ 620°C, the prepared sodium iron phosphate pyrophosphate positive-electrode material 100 exhibits higher sphericity. When the second temperature *T*2 for sintering satisfies 450°C ≤ *T*2 ≤ 620°C, the sphericity of the prepared sodium iron phosphate pyrophosphate positive-electrode material 100 first increases and then decreases with the increase of the second temperature. Both excessively high and excessively low second temperatures *T*2 will reduce the sphericity of the prepared sodium iron phosphate pyrophosphate positive-electrode material 100, while also reducing the powder compacted density, electrode-level compacted density, capacity per gram, and electrode capacity of the prepared sodium iron phosphate pyrophosphate positive-electrode material 100.

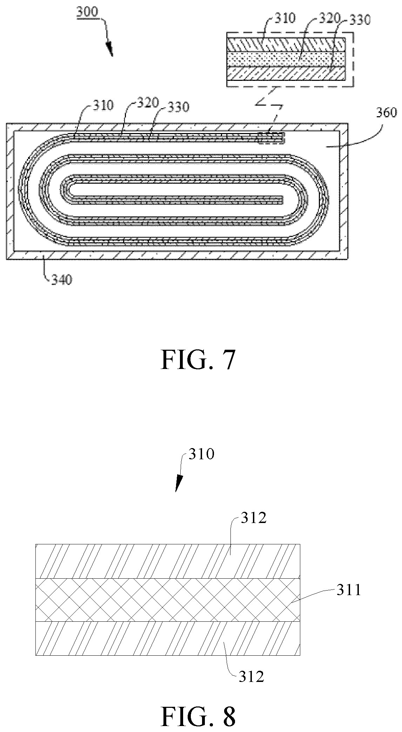

Reference is made to FIG. 6 and FIG. 7. Embodiments of the disclosure further provide a battery 300. The battery 300 includes an electrolyte 360, a positive electrode 310, a separator 320, and a negative electrode 330. The positive electrode 310 includes the sodium iron phosphate pyrophosphate positive-electrode material 100 of embodiments of the disclosure, and the positive electrode 310 is immersed in the electrode. The separator 320 is disposed on one side of the positive electrode 310 and is immersed in the electrode. The negative electrode 330 is disposed on one side of the separator 320 facing away from the positive electrode 310 and is immersed in the electrolye.

The battery 300 of embodiments of the disclosure may be, but is not limited to a sodium ion battery 300.

Optionally, the electrolyte 360 includes a solvent and an electrolyte salt.

Reference is made to FIG. 8, optionally, the positive electrode 310 includes a positive current collector 311 and a positive active layer 312. The positive current collector 311 may be, but is not limited to aluminum foil and aluminum sheet. The positive active layer 312 includes the sodium iron phosphate pyrophosphate positive-electrode material 100, a first conductive agent, a first bonding agent, a first thickening agent, etc.

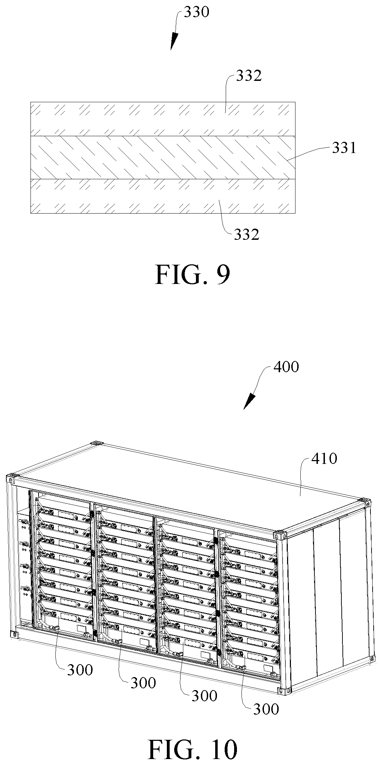

Reference is made to FIG. 9, optionally, the negative electrode 330 includes a negative current collector 331 and a negative active layer 332. The negative current collector 331 may be, but is not limited to copper foil and copper sheet. The negative active layer 332 includes a negative active material, a second conductive agent, a second bonding agent, a second thickening agent, etc.

Optionally, the separator 320 may be, but is not limited to at least one of polypropylene film (abbreviated as PP film), polyethylene film (abbreviated as PE film), ceramic separator 320, etc.

Optionally, the battery 300 further includes a shell 340 and an end cap assembly 350. The shell 340 and the end cap assembly 350 enclose to define a closed accommodating chamber (not illustrated in the drawings), which is configured to accommodate the electrolyte 360, the positive electrode 310, the separator 320, and the negative electrode 330. It may be understood that, the end cap assembly 350 is electrically connected to the positive electrode 310 and the negative electrode 330. The positive electrode 310 and the negative electrode 330 are led out from the end cap assembly 350 so as to electrically connect an external device or other batteries 300.

Reference is made to FIG. 10, embodiments of the disclosure further provide an energy storage device, including a housing 410 and the battery 300 described in embodiments of the disclosure. Multiple batteries 300 are accommodated in the housing 410.

The energy storage device 400 of the disclosure may be applied to, but is not limited to, power generation side energy storage, grid side energy storage, and power consumption side energy storage.

The term "multiple" refers to more than or equal to two.

It may be understood that, the multiple batteries 300 of the energy storage device 400 may be connected in parallel with each other, or connected in series with each other, or partially connected in parallel and partially connected in series (i.e., in series-parallel connection), where a connection manner of the multiple batteries 300 of the same energy storage device 400 is not specifically limited in the disclosure.

It may be understood that, an accommodating chamber is defined in the housing 410, and the multiple batteries 300 are accommodated in the accommodating chamber. In some embodiments, each accommodating chamber accommodates one battery 300. In other embodiments, each accommodating chamber accommodates multiple batteries 300.

Optionally, the energy storage device 400 may include, but is not limited to a battery module, a battery pack, a battery system, etc. The actual application form of the energy storage device 400 provided in embodiments of the disclosure may be, but is not limited to, the above-listed products, or may be other application forms. Embodiments of the disclosure do not impose strict restrictions on the application form of the energy storage device 400. For illustrative purposes, in embodiments of the disclosure, the energy storage device 400 is a multi-cell battery 300. When the energy storage device 400 is a cell 300, the energy storage device 400 may be at least one of a cylindrical cell 300, a square cell 300, etc.

The terms of "embodiment" and "implementation" mentioned in the present disclosure means that the specific features, structures, or characteristics described with reference to the embodiments may be encompassed in at least one embodiment of the present disclosure. The phrase at various locations in the specification does not necessarily refer to the same embodiment, or an independent or alternative embodiment exclusive of another embodiment. Those skilled in the art may understand explicitly and implicitly that the embodiments described in the present disclosure may be combined with other embodiments. In addition, it may also be understood that the features, structures or characteristics described in the embodiments of the present disclosure may be combined as desired to obtain embodiments without departing from the spirit and scope of the technical solution of the present disclosure if there is no contradiction between the embodiments.

Finally, it may be noted that the above embodiments are merely used for illustrating rather than limiting the technical solutions of the present disclosure; and although the present disclosure has been described in detail with reference to the preferred embodiments, those skilled in the art may understand that modifications or equivalent substitutions may be made to the technical solutions of the present disclosure without departing from the spirit and scope of the technical solutions of the present disclosure.

## Claims

1. A sodium iron phosphate pyrophosphate positive-electrode material (100), wherein a molar ratio A of sodium element to iron element in the sodium iron phosphate pyrophosphate positive-electrode material (100) satisfies 1.36 ≤ *A* ≤ 1.45.

2. The sodium iron phosphate pyrophosphate positive-electrode material (100) of claim 1, wherein a molar ratio B of sodium element to phosphorus element in the sodium iron phosphate pyrophosphate positive-electrode material (100) satisfies 1.02 ≤ *B* ≤ 1.05.

3. The sodium iron phosphate pyrophosphate positive-electrode material (100) of claim 1 or 2, wherein a particle size distribution of the sodium iron phosphate pyrophosphate positive-electrode material (100) satisfies 2.5µm ≤ *D*10 ≤ 8.5µm, 8µm ≤ *D*50 ≤ 14µm, 16µm ≤ D90 ≤ 23µm, 24µm ≤ D99 ≤ 30µm, and 31µm ≤ *D100* ≤ 38µm, wherein D10 refers to a particle diameter when a cumulative volume fraction in a volume-based distribution reaches 10%, D50 refers to a particle diameter when a cumulative volume fraction in a volume-based distribution reaches 50%, D90 refers to a particle diameter when a cumulative volume fraction in a volume-based distribution reaches 90%, D99 refers to a particle diameter when a cumulative volume fraction in a volume-based distribution reaches 99%, and *D*100 refers to a particle diameter when a cumulative volume fraction in a volume-based distribution reaches 100%.

4. The sodium iron phosphate pyrophosphate positive-electrode material (100) of any one of claims 1 to 3, wherein an average sphericity *α* of the sodium iron phosphate pyrophosphate positive-electrode material (100) satisfies 0.9 ≤ *α* ≤ 1.

5. The sodium iron phosphate pyrophosphate positive-electrode material (100) of any one of claims 1 to 4, wherein the sodium iron phosphate pyrophosphate positive-electrode material (100) comprises a sodium iron phosphate pyrophosphate particle (10) and a carbon coating layer (20), wherein the carbon coating layer (20) wraps a surface of the sodium iron phosphate pyrophosphate particle (10), and a mass fraction of the carbon coating layer (20) in the sodium iron phosphate pyrophosphate positive-electrode material (100) ranges from 1.5% to 2.8%.

6. The sodium iron phosphate pyrophosphate positive-electrode material (100) of any one of claims 1 to 5, wherein a powder compacted density of the sodium iron phosphate pyrophosphate positive-electrode material (100) ranges from 2.05g/cm³ to 2.35g/cm³.

7. The sodium iron phosphate pyrophosphate positive-electrode material (100) of any one of claims 1 to 6, wherein an electrode-level compacted density of the sodium iron phosphate pyrophosphate positive-electrode material (100) after being prepared as a positive electrode ranges from 2.1g/cm³ to 2.4g/cm³.

8. A method for preparing a sodium iron phosphate pyrophosphate positive-electrode material (100), comprising:
mixing (S201) a sodium source, a phosphorus source, an iron source, and a carbon source in a solvent to obtain a slurry, wherein a molar ratio A of sodium element in the sodium source to iron element in the iron source satisfies 1.36 ≤ *A* ≤ 1.45;
spray-drying (S202) the slurry to obtain a precursor powder; and
sintering (S203) the precursor powder to obtain the sodium iron phosphate pyrophosphate positive-electrode material.

9. The method of claim 8, wherein a molar ratio B of sodium element in the sodium source to phosphorus element in the phosphorus source satisfies 1.02 ≤ *B* ≤ 1.05.

10. The method of claim 8 or 9, wherein in response to at least one of the sodium source, the phosphorus source, the iron source, or the carbon source being water-insoluble, mixing the sodium source, the phosphorus source, the iron source, and the carbon source in the solvent to obtain the slurry comprises:
mixing the sodium source, the phosphorus source, the iron source, and the carbon source in water and performing sand milling to obtain the slurry, wherein a duration of the sand milling ranges from 0.5h to 4h and a speed of the sand milling ranges from 1000rpm to 4000rpm.

11. The method of any one of claims 8 to 10, wherein a solid content of the slurry ranges from 30% to 40%.

12. The method of any one of claims 8 to 11, wherein spray-drying the slurry to obtain the precursor powder comprises:
spray-drying the slurry at a first temperature T1 to obtain the precursor powder, wherein T1 satisfies 97°C ≤ T1 ≤ 118°C.

13. The method of any one of claims 8 to 12, wherein sintering the precursor powder to obtain the sodium iron phosphate pyrophosphate positive-electrode material comprises:
sintering the precursor powder at a second temperature *T*2 to obtain the sodium iron phosphate pyrophosphate positive-electrode material, wherein *T2* satisfies 450°C ≤ *T*2 ≤ 620°C.

14. A battery (300), comprising:
an electrolyte (360);
a positive electrode (310) comprising the sodium iron phosphate pyrophosphate positive-electrode material (100) of any one of claims 1 to 7, or the sodium iron phosphate pyrophosphate positive-electrode material (100) prepared by the method of any one of claims 8 to 13;
a separator (320) disposed on one side of the positive electrode (310); and
a negative electrode (330) disposed on one side of the separator (320) facing away from the positive electrode (310).

15. An energy storage device (400), comprising:
a housing (410); and
a plurality of batteries (300) of claim 14, wherein the plurality of batteries (300) are accommodated in the housing (410).
